# EUROPEAN PATENT SPECIFICATION

(11) **EP 4 086 125 B1**
(45) Date of publication and mention of the grant of the patent: **26.03.2025**
(21) Application number: 21172571.8
(22) Date of filing: 06.05.2021
(51) Int. Cl.: B60T 8/32, B60T 8/17, B60T 8/36

(54) **ANTI-LOCK BRAKING SYSTEM**
ANTIBLOCKIERBREMSSYSTEM
SYSTÈME DE FREINAGE ANTIBLOCAGE

(43) Date of publication of application: 09.11.2022
(73) Proprietor: Safran Landing Systems UK Ltd, Gloucester, Gloucestershire GL2 9QH (GB)
(72) Inventor: LOVE, Tom, Ross-On-Wye HR9 7NX (GB)
(74) Representative: Wardle, Callum Tarn

(56) References cited:
- GB-A- 2 478 423
- JP-A- S6 177 554
- KR-B1- 101 732 519
- US-A- 4 690 465

## Description

### BACKGROUND OF THE INVENTION

The present invention relates to aircraft braking systems, and more specifically to aircraft anti-lock braking systems. An anti-lock, or anti-skid, system is intended to modify the braking force in the event of a braked wheel slipping.

The current state of the art for aircraft brakes are centrally supplied hydraulic brakes, electrohydraulic actuator (EHA) brakes and, more recently, the emergence of electromechanical (EMA) brakes. For hydraulic brakes (either centrally supplied or EHA), the anti-skid function is achieved through metering of hydraulic fluid to and from the brake actuator to modify the braking pressure.

Anti-skid control is a highly dynamic application, which requires a fast response of the actuator. However, the responsiveness and resolution of conventional braking systems is limited, and dynamic operation of those systems leads to energy losses, resulting in a less effective and less efficient anti-lock braking system. Furthermore, using conventional hydraulic systems to provide anti-skid protection requires tightly toleranced manufacturing of servo-valves, and EMA systems often wear due to oscillating control.

UK patent application GB2478423A describes an anti-locking brake arrangement in which a piezo-electric actuator is inserted between a brake piston and the back side of a brake pad and is included in the regular anti-locking feedback loop.

### SUMMARY OF THE INVENTION

The present inventors have found that the high stiffness of piezoelectric actuators makes them more suitable for highly dynamic applications and fast response times, such as required in anti-lock braking systems. Piezoelectric actuators have high resolution (capable of very fine control) and, as there is no fluid returned to a tank, there is less energy lost. However, piezoelectric actuators cannot achieve the high displacement required to function as high-stroke actuators without substantial amplification, which results in a loss of force capability.

To mitigate this and other problems, the present inventors have separated the two conflicting demands of high displacement and high precision/response. The solution in essence uses a conventional braking system, such as centrally supplied hydraulics or EHA in series with a piezoelectric actuator.

The conventional, high-stroke actuator is responsible for the relatively large stroke of closing the initial clearance between the brake piston and stator of the brake, and applying the desired braking pressure. Once 'full' braking pressure is reached, anti-skid control can then be achieved through the use of the low-stroke, high-force piezoelectric actuator.

According to a first aspect of the invention, as defined in the appended claim 1, there is provided an anti-lock braking system for an aircraft, comprising: a hydraulic braking actuator configured to apply a braking pressure to a brake stator; and a piezoelectric actuator connected in series with the braking actuator, wherein the piezoelectric actuator is operable to modify the braking pressure applied to the brake stator to provide anti-skid/slip protection, wherein the hydraulic braking actuator is configured to be locked in position during operation of the piezoelectric actuator by preventing entry and exit of hydraulic fluid to and from an active chamber of the braking actuator.

By connected in series, it is meant that the braking actuator and the piezoelectric actuator are mechanically connected, such that the respective displacements of the actuators combine. In other words, the extension axis (longitudinal axis defined by the extension of the actuator) of the piezoelectric actuator is aligned with and parallel to the extension axis of the braking actuator. A modification of the braking pressure can be a reduction in braking pressure, and/or a modulation (e.g. highfrequency alternation) of the braking pressure. The piezoelectric actuator can comprise a piezoelectric element, preferably a piezoelectric stack, and an electronic drive unit configured to control the piezoelectric element. The piezoelectric element with oscillatory high voltage/low current supply. Control can be purely supply ON/supply OFF.

With this arrangement, an improved anti-lock braking system can be provided. In particular, a more responsive anti-lock braking system can be achieved, capable of finer control and with reduced energy loss when operating dynamically. The system can also be less prone to wear and can be more reliable. Furthermore, the system can have reduced complexity, size and/or mass compared to the prior art arrangements.

The anti-lock braking system may be operable in a first phase and a second phase. The first phase may be referred to as a 'normal', or 'high-stroke', braking phase, which can be responsible for the relatively large stroke of closing the initial clearance between the brake piston and stator and applying the desired braking pressure. The braking pressure can be exerted by the braking actuator extending from a first extension state to a second (greater) extension state. The piezoelectric actuator is also operable between first and second extension states. In the first phase, the piezoelectric actuator is arranged to be in an extended state. The piezoelectric actuator can assume an extended state when energised by the electronic drive unit (i.e. when a voltage is applied to the piezoelectric element). In the second phase, the braking actuator is configured to remain in the second extension state and the piezoelectric actuator is configured to retract from the extended state to a retracted state. In other words, once 'full' braking pressure is achieved, the high-stroke braking actuator can be fixed at its current stroke and the anti-skid function can be provided by the piezoelectric actuator retracting to modify (in this instance by reducing) the braking pressure applied to the brake stator. The piezoelectric actuator can retract when it is de-energised (i.e. when the electronic drive unit stops applying a voltage to the piezoelectric element). Alternatively, the piezoelectric actuator could be configured to assume an extended state when de-energised by the electronic drive unit, and to retract when it is energised.

In the second phase the braking actuator may be arranged to be locked in the second extension state. Where the braking actuator is a hydraulic actuator, the braking actuator can be locked in the second extension state by controlling entry and exit of hydraulic fluid to and from an active chamber of the braking actuator. With this arrangement, the stiffness of the system is increased when operating in the second phase, which increases responsiveness and reduces energy losses. When the braking actuator is an EMA, the braking actuator can be locked in position by using, for instance, a brake or a motor to hold the extension. This arrangement can avoid the need for fine manufacturing to deal with mechanical backlash in EMAs and can reduce wear due to the very small oscillations on mechanical transmissions.

The braking actuator and the piezoelectric actuator may be arranged such that the braking actuator is positioned adjacent to the brake stator. In other words, the braking actuator may be positioned between the piezoelectric actuator and the brake stator. Alternatively, the braking actuator and the piezoelectric actuator may be arranged such that the piezoelectric actuator is positioned adjacent to the brake stator, between the braking actuator and the brake stator. As will be appreciated, there may be a mechanical clearance between the braking actuator/piezoelectric actuator and the brake stator when the brakes are not being applied.

According to a further aspect of the invention, there is provided an aircraft landing gear comprising the anti-lock braking system according to any of the descriptions above. According to a further aspect of the invention, there is provided an aircraft comprising the aircraft landing gear.

### BRIEF DESCRIPTION OF THE DRAWINGS

Embodiments of the invention will now be described with reference to the accompanying drawings, in which:

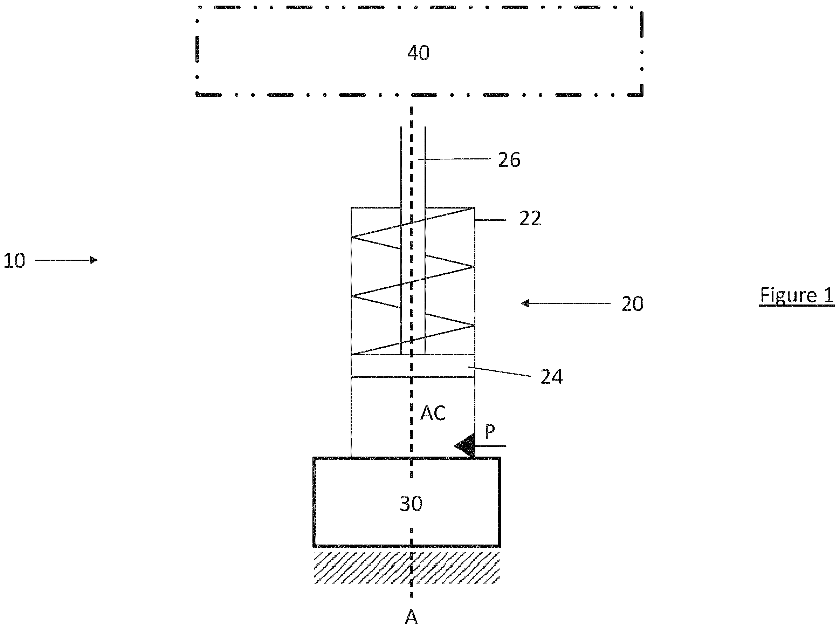

Figure 1 is a diagram of an anti-lock braking system according to an embodiment of the invention.

### DETAILED DESCRIPTION OF EMBODIMENTS

In the most general sense, the invention uses a conventional braking system, such as centrally supplied hydraulics or EHA, in series with a piezoelectric actuator. The conventional, high-stroke actuator is responsible for the relatively large stroke of closing the initial clearance between the brake piston and stator of the brake, and applying the desired braking pressure. Once 'full' braking pressure is reached, anti-skid control can then be achieved through the use of the low-stroke, high-force piezoelectric actuator.

Figure 1 is a diagram of an anti-lock braking system 10 in accordance with an example of the invention. The braking system 10 comprises a high-stroke braking actuator 20 coupled in series with a piezoelectric actuator 30.

The high-stroke braking actuator 20 is illustrated in Figure 1 as a hydraulic actuator. The hydraulic braking actuator 20 comprises a cylinder 22 within which a piston and rod assembly 24, 26, is slidably housed so that the actuator 20 can extend and retract along a longitudinal axis A. The cylinder 22 includes a port P for coupling the actuator 20 to a hydraulic fluid supply circuit (not shown), such as a central hydraulic system. The high-stroke actuator 20 shown in Fig. 1 is single acting in that there is a single port P defining a single active chamber. The space within the cylinder 22 between the port P and piston 24 defines an active chamber AC (also referred to as an extension chamber) that hydraulic fluid such as oil can be supplied to in order to cause the actuator 20 to extend. As shown, the piston rod 26 of the braking actuator is coupled to one or more brake stators 40. When the braking actuator 20 extends, the one or more brake stators 40 apply a braking pressure to one or more rotors fixed to a wheel (not shown). Friction between the stator(s) and rotor(s) applies a braking torque which acts to slow the rotation of the wheel (or prevent it from rotating in the case where the aircraft is stationary). Of course, in practice aircraft braking assemblies are more complicated and comprise many more elements besides. For instance, in practice a braking assembly for a single wheel may have multiple braking actuators. However, description of those elements is not necessary for the purposes of understanding the present invention.

The piezoelectric actuator 30 can be any suitable piezoelectric actuator. For example, the piezoelectric actuator 30 can comprise a piezoelectric element, preferably a piezoelectric stack, driven by an electronic drive unit. The piezoelectric actuator 30 is operable to extend and retract along the longitudinal axis A. The piezoelectric stack may be configured to assume a retracted position when de-energised and to respond to an applied voltage by extending. Alternatively, the piezoelectric stack may be configured to assume an extended position when de-energised and to respond to an applied voltage by retracting. As will be appreciated, either configuration can be achieved through appropriate selection of the piezoelectric material (e.g. the polarisation), or by means of amplification.

The piezoelectric actuator 30 is coupled in series with the high-stroke braking actuator 20, for example as shown in Figure 1. In other words, the piezoelectric actuator 30 is mechanically connected to the high-stroke braking actuator 20 such that the extension axis of each actuator is aligned with and parallel to the axis A, as shown. As an example, the piezoelectric actuator 30 can be placed in mechanical communication with (e.g. affixed to) an end of the cylinder casing 22 of the high-stroke actuator, on the opposite side to the piston rod/stator. Alternatively, the piezoelectric actuator 30 and high-stroke actuator 20 could be arranged such that the piezoelectric actuator 30 is adjacent to (and acts on) the brake stator 40. In either case, the total displacement delivered to the brake stator 40 is a combination of the respective displacements of the piezoelectric actuator 30 and the high-stroke actuator 20.

As described above, the high-stroke actuator 20 is responsible for the relatively large stroke of closing the initial clearance between the brake piston and stator of the brake, and applying the desired braking pressure. This is referred to as a first phase. Sticking to the hydraulic braking actuator example, in the first phase a hydraulic fluid supply circuit supplies hydraulic fluid under pressure to the port P of the braking actuator 20 (e.g. from a reservoir of a central hydraulic system). Hydraulic fluid entering the port P into the active chamber AC forces the piston 24 towards the side of the casing 22 from which the rod 26 extends. This causes the actuator 20 to change during the first phase between first and second extension states, which in turn applies a braking force to the brake rotor(s) via one or more brake stators 40, as discussed above. The piezoelectric actuator 30 can be extended throughout the first phase, by energising the piezoelectric stack (applying a voltage using the electronic drive unit). Equally, the piezoelectric actuator could be configured such that it is extended when de-energised (no voltage is applied).

Once 'full' braking pressure is reached (i.e. once the desired braking force is applied, but the wheels have started to or are close to slipping), anti-skid control can then be achieved in a second phase through the use of the low-stroke, high-force piezoelectric actuator 30. Any suitable anti-skid sensing and control can be used.

In the second phase, the high-stroke braking actuator 20 is locked, or fixed at its current stoke position (or otherwise remains in the second extension state). In the hydraulic braking actuator example, this can be achieved by controlling (i.e. preventing) entry and exit of hydraulic fluid into the active chamber AC. The anti-skid function is then achieved by retracting (i.e. de-energising) the piezoelectric actuator 30 to modify the braking pressure applied to the brake stator 40. As will be appreciated, a retraction of the piezoelectric actuator 30 whilst the high-stroke actuator 20 is locked in position results in a relatively small reduction in braking pressure applied to the brake stator 40, which in turn relieves the braking torque applied to the wheel(s). The braking pressure can be continuously modulated for a period of time, as required to prevent skidding. For instance, a closed loop control system may be used to automatically regulate the braking pressure as required. In some instances, the piezoelectric actuator may be driven to alternate between extended and retracted states, but it will be appreciated that the form of brake pressure modulation will depend on the circumstances (as determined, for example, by closed loop control). The piezoelectric stack can be driven with high voltage/low current supply.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parenthesis shall not be construed as limiting the claims. The word "comprising" does not exclude the presence of elements or steps other than those listed in any claim or the specification as a whole. The singular reference of an element does not exclude the plural reference of such elements and vice-versa. Parts of the invention may be implemented by means of hardware comprising several distinct elements. In a device claim enumerating several parts, several of these parts may be embodied by one and the same item of hardware. The mere fact that certain measures are recited in mutually different dependent claims does not indicate that a combination of these measures cannot be used to advantage.

## Claims

1. An anti-lock braking system (10) for an aircraft, comprising:
a hydraulic braking actuator (20) configured to apply a braking pressure to a brake stator (40); and
a piezoelectric actuator (30) connected in series with the braking actuator, wherein the piezoelectric actuator is operable to modify the braking pressure applied to the brake stator to provide anti-skid protection, **characterised in that** the hydraulic braking actuator (20) is configured to be locked in position during operation of the piezoelectric actuator (30) by preventing entry and exit of hydraulic fluid to and from an active chamber of the braking actuator.

2. The anti-lock braking system of claim 1, wherein the anti-lock braking system is operable in a first phase and a second phase, wherein:
in the first phase, the piezoelectric actuator (30) is arranged to be in an extended state and the braking pressure is exerted by the braking actuator (20) extending from a first extension state to a second extension state;
in the second phase, the braking actuator (20) is configured to remain in the second extension state and the piezoelectric actuator (30) is configured to retract from the extended state to a retracted state.

3. The anti-lock braking system of any preceding claim, wherein the braking actuator (20) and the piezoelectric actuator (30) are arranged such that the braking actuator is positioned adjacent to the brake stator (40), between the piezoelectric actuator and the brake stator.

4. An aircraft landing gear comprising the anti-lock braking system of any preceding claim.

5. An aircraft comprising the aircraft landing gear of claim 4.

## Patentansprüche

1. Anti-Blockier-Bremssystem (10) für ein Flugzeug, das aufweist:
einen hydraulischen Bremsaktuator (20), der dazu ausgebildet ist, einen Bremsdruck auf einen Bremsstator (40) auszuüben; und
einen piezoelektrischen Aktuator (30), der mit dem Bremsaktuator in Reihe geschaltet ist, wobei der piezoelektrische Aktuator zur Änderung des auf den Bremsstator ausgeübten Bremsdrucks betrieben werden kann, um einen Anti-Blockier Schutz zu gewährleisten, **dadurch gekennzeichnet, dass** der hydraulische Bremsaktuator (20) so ausgebildet ist, dass er während des Betriebs des piezoelektrischen Aktuators (30) so in seiner Position verriegelt ist, dass ein Eintreten und Austreten von Hydraulikflüssigkeit in und aus der aktiven Kammer des Bremsaktuators verhindert wird.

2. Anti-Blockier-Bremssystem nach Anspruch 1, wobei das Anti-Blockier-Bremssystem in einer ersten Phase und einer zweiten Phase betrieben werden kann, wobei:
in der ersten Phase der piezoelektrische Aktuator (30) so angeordnet ist, dass er sich in einem ausgefahrenen Zustand befindet, und der Bremsdruck von dem Bremsaktuator (20) ausgeübt wird, der von einem ersten Ausfahrzustand zu einem zweiten Ausfahrzustand ausfährt;
in der zweiten Phase der Bremsaktuator (20) so ausgebildet ist, dass er in dem zweiten Ausfahrzustand verbleibt, und der piezoelektrische Aktuator (30) so ausgebildet ist, dass er sich aus dem ausgefahrenen Zustand in einen eingefahrenen Zustand zurückzieht.

3. Anti-Blockier-Bremssystem nach einem der vorstehenden Ansprüche, wobei der Bremsaktuator (20) und der piezoelektrische Aktuator (30) so angeordnet sind, dass der Bremsaktuator angrenzend an den Bremsstator (40) zwischen dem piezoelektrischen Aktuator und dem Bremsstator positioniert ist.

4. Flugzeugfahrwerk, welches das Anti-Blockier-Bremssystem nach einem der vorstehenden Ansprüche aufweist.

5. Flugzeug, welches das Flugzeugfahrwerk nach Anspruch 4 aufweist.

## Revendications

1. Système de freinage antiblocage(10) pour un aéronef, comprenant :
un actionneur de freinage hydraulique (20) configuré pour appliquer une pression de freinage à un stator de frein (40) ; et
un actionneur piézoélectrique (30) relié en série à l'actionneur de freinage, dans lequel l'actionneur piézoélectrique est fonctionnel pour modifier la pression de freinage appliquée au stator de freinage pour assurer une protection antidérapante, **caractérisé en ce que** l'actionneur de freinage hydraulique (20) est configuré pour être verrouillé en position pendant le fonctionnement de l'actionneur piézoélectrique (30) en empêchant l'entrée et la sortie de fluide hydraulique dans et depuis une chambre active de l'actionneur de freinage.

2. Système de freinage antiblocage selon la revendication 1, dans lequel le système de freinage antiblocage est fonctionnel dans une première phase et une seconde phase, dans lequel :
dans la première phase, l'actionneur piézoélectrique (30) est agencé pour être dans un état d'extension et la pression de freinage est exercée par l'actionneur de freinage (20) s'étendant d'un premier état d'extension à un second état d'extension ;
dans la seconde phase, l'actionneur de freinage (20) est configuré pour rester dans le second état d'extension et l'actionneur piézoélectrique (30) est configuré pour se rétracter de l'état d'extension à un état de rétraction.

3. Système antiblocage de frein selon une quelconque revendication précédente, dans lequel l'actionneur de freinage (20) et l'actionneur piézoélectrique (30) sont agencés de sorte que l'actionneur de freinage soit positionné adjacent au stator de frein (40), entre l'actionneur piézoélectrique et le stator de frein.

4. Train d'atterrissage d'aéronef comprenant le système de freinage antiblocage selon une quelconque revendication précédente.

5. Aéronef comprenant le train d'atterrissage d'aéronef selon la revendication 4.
